Europäisches Patentamt

European Patent Office

Office européen des brevets

(19)

(11) Publication number: **0 263 857 B1**

# EUROPEAN PATENT SPECIFICATION

(12)

(45) Date of publication of patent specification :
**10.07.91 Bulletin 91/28**

(51) Int. Cl.$^5$ : **A01G 9/14, A01G 31/02**

(21) Application number : **87902446.1**

(22) Date of filing : **03.04.87**

(86) International application number :
**PCT/DK87/00034**

(87) International publication number :
**WO 87/06094 22.10.87 Gazette 87/23**

(54) CONVEYER.

(30) Priority : **07.04.86 DK 1564/86**

(43) Date of publication of application :
**20.04.88 Bulletin 88/16**

(45) Publication of the grant of the patent :
**10.07.91 Bulletin 91/28**

(84) Designated Contracting States :
**AT BE CH DE FR GB IT LI LU NL SE**

(73) Proprietor : **Broennums Maskinfabrik A/S
61 Vestergade
DK-5300 Kerteminde (DK)**

(72) Inventor : **SJOSTRAND, Jorgen
Enghaugen, 9
DK-5240 Odense NO (DK)**

(74) Representative : **Kraus, Walter, Dr. et al
Patentanwälte Kraus, Weisert & Partner
Thomas-Wimmer-Ring 15
W-8000 München 22 (DE)**

EP 0 263 857 B1

## Description

The invention relates to a system for advancing transport baskets with plants during the growth period of said plants and of the type having advancing means ensuring increase of the distance between the plants, the transport baskets with the plants being supported by a plurality of radial guide rails.

Due to the high expenses in connection with creating ideal conditions of growth for plants cultivated in greenhouses, it is necessary to utilize the growth areas in the best possible way. This implies that the plants must be placed as close to each other as possible. This has created a need of gradually increasing the distance between the constantly growing plants.

US-A-4 617 755 and EP-A-143 349 disclose a system of the above type. A large number of complicated transport devices is required to ensure the advancing of the plants along the radial guide rails, and the increase of the distance between the plants is made stepwise, i.e. the distance remains unchanged in each one of a plurality of radial sections and is only changed from section to section.

Further transport systems for plant cultivation are known today, wherein an attempt is made to make optimal use of the area while imparting a distance during the growth period, said known systems consist typically of channels wherein the plants are placed at their mutual final distance. By moving these channels away from one another during the growth period the area is utilised only in one direction.

This method has been further improved in US-A-4 166 431, where the plants are shifted intermittently within the channels themselves by means of a string pull. In order to achieve better utilization of the area when using this system, it is, however, necessary either to move parts of the channels containing plants to extend other channels, or to move the plants from one channel to another, since the string pull only allows imparting of a certain distance with every pull of the string.

The system according to the invention is characterised in that it comprises two horizontal rotor bodies positioned around a common vertical axis, one of said rotor bodies being a spiral body forming a spiral path whereas the other one comprises said plurality of radial guide rails, for providing an even and continuous increase of the distance between the plants and for the forced advancement of the transport baskets along the spiral path from the centre to the periphery, at least one of said rotor bodies rotating. Spiral path means in this connection form a plane spiral, the windings of which being located in such a manner that the distance between the windings increases from the centre to the periphery.

The transport system acts in such a way as to carry the transport baskets with plants from the centre to the periphery, as the spiral rotor body conveys them in an outward direction, the rotor body with the radial guide rails simultaneously ensuring the required mutual distance between the transport baskets.

The special feature of the transport system is that as the plants are advanced with an evenly and continuously increasing distance between them it is possible, on the one hand, to make good use of the available growth area simultaneously considering the space requirements of the plants and, on the other hand to avoid manual displacements during the growth period.

In a simple embodiment of the assembled transport system according to the invention the spiral body is positioned within a vessel wherein nutrientenriched water circulates or where the water level is raised and lowered entirely in accordance with the requirements of the plants.

In another embodiment the spiral body is formed in such a way that it forms a channel or is provided with such water supply means as to enable water to be supplied to the plants either in a continuous flow or intermittently.

In a third embodiment the water supply means are provided along the radial guide rails or formed during the manufacture of the guide rails to ensure that the plants are supplied with the required amount of water.

In a fourth embodiment the spiral body and the transport baskets are provided with tooth-like means so that the baskets are rotated around their own axes, as said means activate the transport baskets to carry out such a rotation when the system is in operation.

In order to avoid excessive evaporation of water and dipping of the plant leaves into water the spaces between the radial guide rails are covered, but this is only necessary if required by the conditions of plant cultivation.

Description of figures

In the drawings figures are shown in the main explaining the invention, in which

Fig. 1. is a top view of a system seen from above with the various main components the system consists of partly shown.

Fig. 2 is a side view of the system.

Fig. 3 shows a round transport basket with tooth-like means.

Fig. 4 shows a square transport basket.

Fig. 5 is a perspective sectional view of the system indicating various embodiments.

Explanation of the drawings

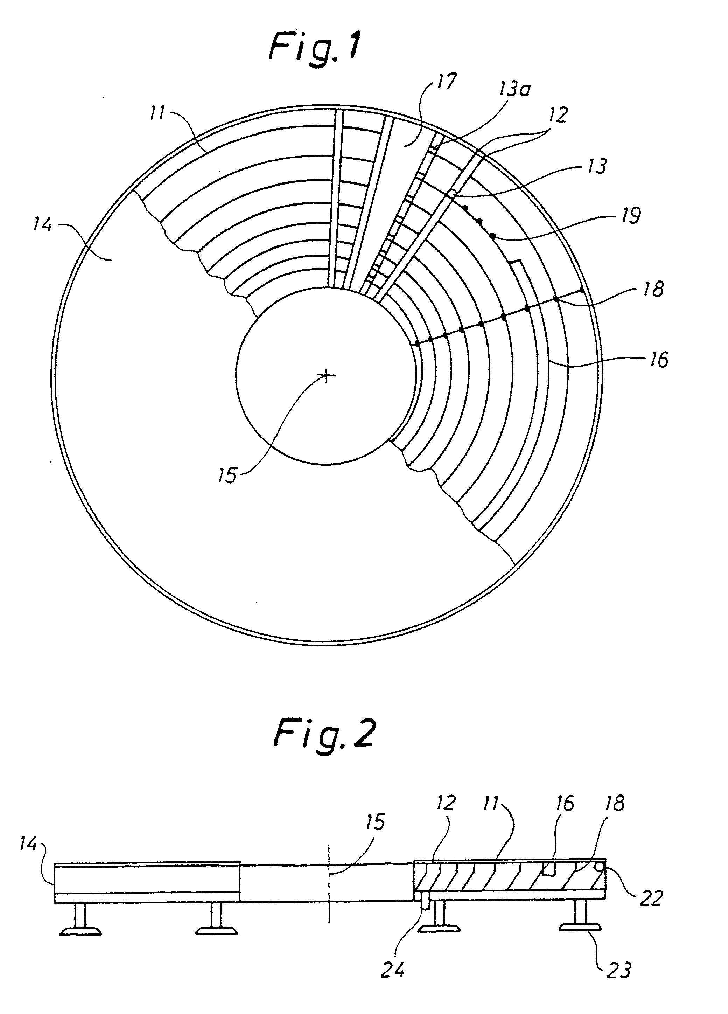

Fig. 1 is a top view of a system showing the main embodiment. The spiral body is shown in two embodiments, item 11 being a single path, and item 16 being a path formed as a channel. The radial guide rails are shown as item 12 and the cover between them as item 17. The transport baskets are shown in two embodiments, item 13 and item 13a, respectively.

The system as installed in a vessel is illlustrated as item 14. The spiral body and the radial guide rails are positioned around a common vertical axis item 15.

Holders for the helical body are shown as item 18, and the tooth-like means activating the transport baskets are shown on the spiral body as item 19.

In Fig. 2, being a side view, the system shows, in addition to the item nos. shown in Fig. 1, a water inlet for the vessel item 22 and a drain item 24 as well as a system raised above ground level with supports item 23.

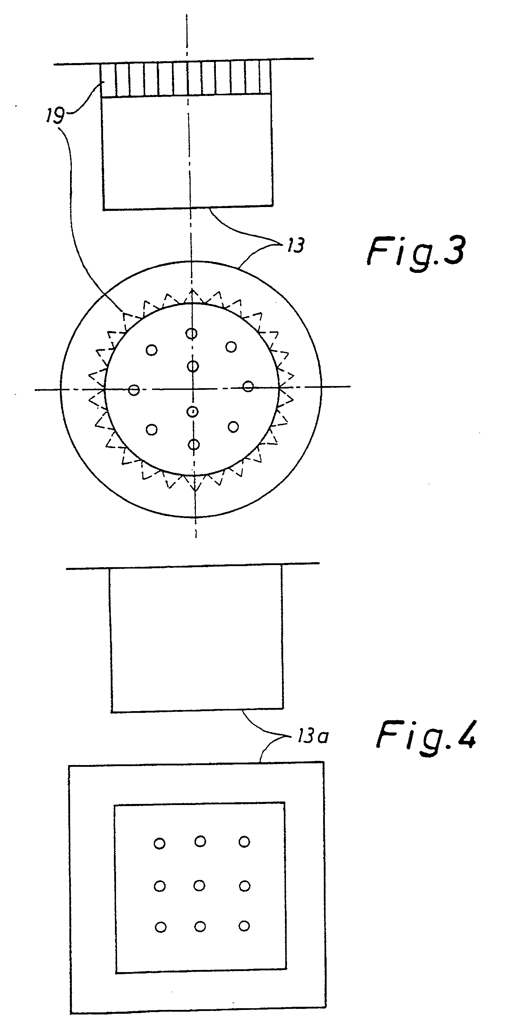

Fig. 3, shows a transport basket item 13 provided with tooth-like means item 19. The figure is a side view and a top view.

Fig. 4 shows a square transport basket item 13a. The figure is a side view and a top view. The transport baskets have the common feature of being available in innumerable embodiments, and an attempt should be made to use transport baskets already available.

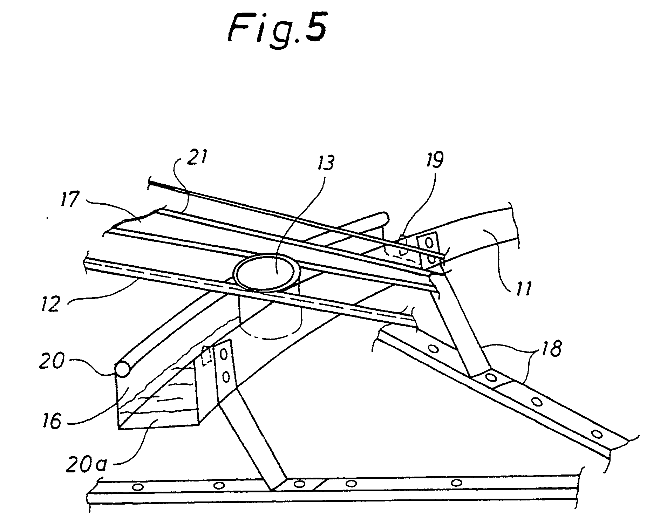

Fig. 5 is a perspective sectional view of the system and apart from the item nos. shown in the preceding figures this figure shows water supply means along the spiral body item 20 and a supply of water to the spiral body formed as a channel item 20a. Water supply means are also shown along the radial guide rails item 21.

## Claims

1. System for advancing transport baskets (13, 13a) with plants during the growth period of said plants and of the type having advancing means ensuring an increase of the distance between the plants, the transport baskets with the plants being supported by a plurality of radial guide rails (12), characterised in that it comprises two horizontal rotor bodies (11, 16) positioned around a common vertical axis (15), one of said rotor bodies (11, 16) being a spiral body forming a spiral path whereas the other one comprises said plurality of radial guide rails (12), for providing an even and continuous increase of the distance between the plants and for the forced advancement of the transport baskets (13, 13a) along the spiral path (11, 16) from the centre to the periphery, at least one of said rotor bodies rotating.

2. System according to claim 1, characterised in that the spiral body forming the spiral path is adjustable so that the mutual distances between the windings of the spiral path from the centre to the outward can be varied.

3. System according to claims 1 to 2, characterised in that the system is positioned in a vessel supplied with water.

4. System according to claims 1 to 3, characterised in that the spiral path is formed as a channel (16) or provided with such water supply means (20) as to enable water to be supplied to the plants either in a continuous flow or intermittently.

5. System according to claims 1 to 4, characterised in that the radial guide rails (12) are manufactured with or provided with such water supply means (21) as to supply the required amount of water to the plants.

6. System according to claims 1 to 5, characterised in that the spiral body is provided with toothlike means (19) acting on the transport baskets (13), said baskets being provided with cooperating teeth in such a manner that the transport baskets are rotated around their own axes when the system is in operation.

7. System according to claims 1 to 6, characterised in that the spaces between the radial guide rails (12) are covered either as part of their construction or with independently mountable covers (17).

## Revendications

1. Dispositif pour faire avancer des corbeilles de transport (13, 13a) contenant des plantes, en période de croissance de ces plantes, et du type ayant des moyens d'avancement assurant une augmentation de la distance entre les plantes, les corbeilles de transport contenant les plantes étant supportées par une pluralité de rails de guidage radiaux (12), caractérisé en ce qu'il comprend deux corps de rotor horizontaux (11, 16) positionnés autour d'un axe vertical commun (15), un de ces corps de rotor (11, 16) étant un corps en spirale formant un trajet en spirale tandis que l'autre comprend la pluralité de rails de guidage radiaux (12), afin d'assurer un accroissement régulier et continu de la distance entre les plantes et de forcer les corbeilles de transport (13, 13a) d'avancer le long du trajet en spirale (11, 16) depuis le centre jusqu'à la périphérie, au moins un des deux corps de rotor tournant.

2. Dispositif selon la revendication 1, caractérisé en ce que le corps en spirale formant un trajet en spirale est adaptable de telle façon que la distance entre les enroulements du trajet en spirale, du centre vers l'extérieur, puisse varier.

3. Dispositif selon les revendications 1 à 2, caractérisé en ce que le dispositif est placé dans un récipient alimenté en eau.

4. Dispositif selon les revendications 1 à 3, caractérisé en ce que le trajet en spirale est constitué comme un canal (16) ou est muni de moyens d'approvisionnement en eau (20) qui permettent l'alimentation en eau des plantes par un débit soit continu soit intermittent.

5. Dispositif selon les revendications 1 à 4, caractérisé en ce que les rails de guidage radiaux (12) sont fabriqués avec des, ou munis de, moyens d'approvisionnement en eau (21) qui approvisionnent la quantité d'eau requise aux plantes.

6. Dispositif selon les revendications 1 à 5, caractérisé en ce que le corps en spirale est muni de moyens en forme de dents (19) sollicitant les corbeilles de transport (13), ces corbeilles étant munies de dents qui coopèrent de telle manière que les corbeilles de transport sont mises en rotation autour de leur propre axe lorsque le dispositif est en opération.

7. Système selon les revendications 1 à 6, caractérisé en ce que les espaces entre les rails de guidage radiaux (12) sont couverts soit par des parties de leur construction soit par des couvercles (17) que l'on peut monter de façon indépendante.


## Patentansprüche

1. System zum Vorrücken von Transportkübeln (13, 13a) mit Pflanzen während der Wachstumsperiode dieser Pflanzen und von der Art, welches eine Vorrückeinrichtung hat, die eine Zunahme des Abstands zwischen den Pflanzen sicherstellt, wobei die Transportkübel mit den Pflanzen von einer Mehrzahl von radialen Führungsschienen (12) gehalten werden, dadurch **gekennzeichnet**, daß es zwei horizontale Rotorkörper (11, 16), die um eine gemeinsame vertikale Achse (15) herum positioniert sind, wobei einer der Rotorkörper (11, 16) ein Spiralkörper ist, der einen Spiralweg bildet, während der andere die Mehrzahl von radialen Führungsschienen (12) umfaßt, zum Vorsehen eines gleichmäßigen und kontinuierlichen Zunehmens des Abstands zwischen den Pflanzen und zum zwangsweisen Vorrücken der Transportkübel (13, 13a) entlang dem Spiralweg (11, 16) von der Mitte nach dem Umfang umfaßt, wobei sich wenigstens einer der Rotorkörper dreht.

2. System nach Anspruch 1, dadurch **gekennzeichnet**, daß der Spiralkörper, welcher den Spiralweg bildet, so einstellbar ist, daß die gegenseitigen Abstände zwischen den Windungen des Spiralwegs von der Mitte nach dem Äußeren zu verändert werden können.

3. System nach den Ansprüchen 1 bis 2, dadurch **gekennzeichnet**, daß das System in einem mit Wasser versorgten Behälter positioniert ist.

4. System nach den Ansprüchen 1 bis 3, dadurch **gekennzeichnet**, daß der Spiralweg als ein Kanal (16) ausgebildet oder mit einer solchen Wasserzuführungseinrichtung (20) versehen ist, daß es ermöglicht wird, Wasser zu den Pflanzen entweder in einer kontinuierlichen Strömung oder intermittierend zuzuführen.

5. System nach den Ansprüchen 1 bis 4, dadurch **gekennzeichnet**, daß die radialen Führungsschienen (12) mit einer solchen Wasserzuführungsrichtung (21) hergestellt oder versehen sind, daß die erforderliche Menge an Wasser zu den Pflanzen zugeführt wird.

6. System nach den Ansprüchen 1 bis 5, dadurch **gekennzeichnet**, daß der Spiralkörper mit zahnartigen Mitteln (19) versehen ist, die auf die Transportkübel (13) einwirken, wobei die Kübel mit zusammenwirkenden Zähnen in einer solchen Art und Weise versehen sind, daß die Transportkübel um ihre eigenen Achsen gedreht werden, wenn das System in Betrieb ist.

7. System nach den Ansprüchen 1 bis 6, dadurch **gekennzeichnet**, daß die Zwischenräume zwischen den radialen Führungsschienen (12) entweder als Teil ihrer Konstruktion oder mit unabhängig anbringbaren Abdeckungen (17) abgedeckt sind.

# Fig.1

# Fig.2

*Fig.3*

*19*

*13*

*Fig.4*

*13a*

# Fig.5